# EUROPEAN PATENT APPLICATION

(11) **EP 3 281 740 A1**
(43) Date of publication of application: **14.02.2018**
(21) Application number: 17186098.4
(22) Date of filing: 14.08.2017
(51) Int. Cl.: B23Q 11/10

(54) **MACHINING A COOLED REGION OF A BODY**

(30) Priority: 12.08.2016 US 201615235666
(71) Applicant: United Technologies Corporation, Farmington, CT 06032 (US)
(72) Inventor: BARNAT, Krzysztof, Berlin, CT Connecticut 06037 (US); REED, Gordon M., Plantsville, CT Connecticut 06479 (US)
(74) Representative: Gittins, Alex Michael

(57) **Abstract**

A method is provided for manufacturing a component using a body (18) comprising metal. This method includes cooling the body (18) to provide at least a cooled region (22) of the body (18), and machining the cooled region (22) using a tool (34) that contacts the cooled region (22).

## Description

### BACKGROUND OF THE INVENTION

### 1. Technical Field

This disclosure relates generally to machining and, more particularly, to machining a body using a tool.

### 2. Background Information

Various methods and systems are known in the art for machining a body. While these methods and systems have various benefits, there is still room in the art for improvement.

### SUMMARY OF THE DISCLOSURE

According to an aspect of the present disclosure, a method is provided for manufacturing a component using a body comprising metal. This method includes: cooling the body to provide at least a cooled region of the body; and machining the cooled region using a tool that contacts the cooled region.

According to another aspect of the present disclosure, another method is provided for manufacturing a component. This method includes: cooling a body and a tool using cryogenic fluid; and machining a cooled region of the body using a cooled region of the tool, wherein the tool engages the body during the machining.

According to still another aspect of the present disclosure, a system is provided for manufacturing a component using a body comprising metal. This system includes a fixture configured to support the body. The system also includes a cooling system and a machining system. The cooling system is configured to cool the body being supported by the fixture to provide at least a cooled region of the body. The machining system includes a tool configured to engage and perform a machining operation on the cooled region of the body being supported by the fixture.

The cooling system may include cryogenic fluid.

The body may be cooled using cryogenic fluid.

The cryogenic fluid may be or include liquid nitrogen.

The cryogenic fluid may be or include liquid carbon-dioxide.

The cryogenic fluid may be directed to a first location during the cooling of the body. The tool may be at a second location behind (e.g., downstream process-wise of) the first location.

The cooling system may include a nozzle configured to direct the cryogenic fluid to a first location. The tool may be at a second location behind (e.g., downstream process-wise of) the first location.

The machining operation may be or include a milling operation, a turning operation, a drilling operation, a grinding operation and/or a cutting operation.

The cooling of the body may include cooling a select region of the body.

The cooling of the body may include cooling substantially an entirety of the body.

The method may include cooling the tool during the machining.

The machining of the cooled region may include milling the cooled region.

The machining of the cooled region may include turning the cooled region.

The machining of the cooled region may include drilling the cooled region.

The machining of the cooled region may include grinding the cooled region.

The machining of the cooled region may include cutting the cooled region.

The foregoing features and the operation of the invention will become more apparent in light of the following description and the accompanying drawings.

### BRIEF DESCRIPTION OF THE DRAWINGS

FIG. 1 is a schematic illustration of a system for manufacturing a component.
FIG. 2 is a flow diagram of a method for manufacturing a component using a manufacturing system.
FIG. 3 is a schematic illustration of an alternative cooling system for the manufacturing system of FIG. 1.
FIG. 4 is a schematic illustration of another alternative cooling system for the manufacturing system of FIG. 1.

### DETAILED DESCRIPTION OF THE INVENTION

The present disclosure includes systems and methods for manufacturing a component. This component may be configured as a component of a gas turbine engine. The component, for example, may be a rotor disk, an engine case, a blade, a vane, a seal element or a shaft. The present disclosure, however, is not limited to the foregoing exemplary gas turbine engine component configurations. Furthermore, the present disclosure is not limited to gas turbine engine applications. For example, the component may alternatively be configured as a component of another type of rotational equipment such as, but not limited to, a wind turbine, a water turbine, an internal combustion (IC) engine or a vehicle drivetrain. The component may also be configured for non-rotational equipment or other apparatuses.

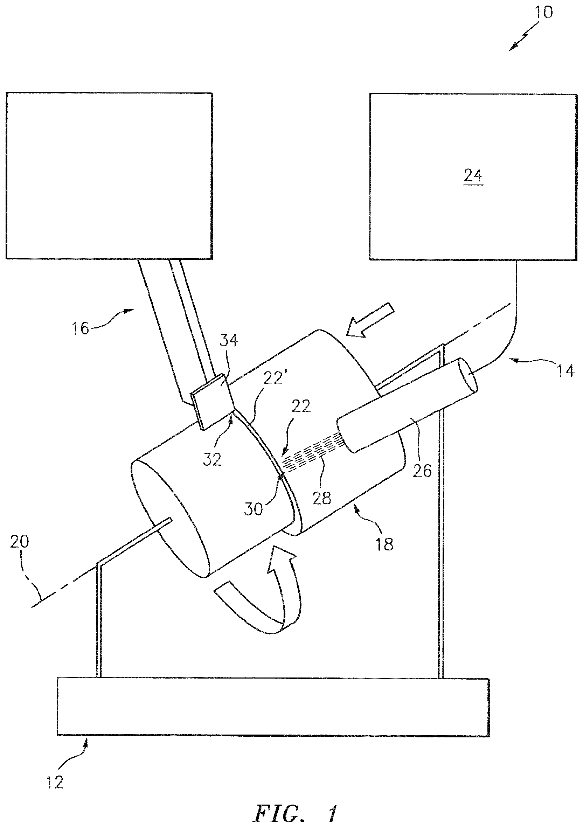

The component is manufactured from a body of material (e.g., see body 18 in FIG. 1). This body may be configured as a substantially unformed mass (e.g., a billet) of material. Herein, the term "unformed" may describe a body of material that has not yet been shaped to resemble the component being manufactured. Alternatively, the body may be configured as a preform body of material. Herein, the term "preform" may describe a body of material that has been shaped to at least partially or substantially resemble the component being manufactured. For example, the body may be a near-net-shape (NSC) casting of the component. The body, of course, is not limited to the foregoing exemplary configurations.

The body material may be or otherwise include metal. This metal may be a pure metal, or a metal alloy. The metal may include, but is not limited to, aluminum (Al), cobalt (Co), nickel (Ni), titanium (Ti), steel and powder nickel. Alternatively, the body material may be a non-metal such as a ceramic, a composite, a polymer or any other material which would benefit from manufacturing systems / methods described herein.

FIG. 1 is a schematic illustration of a system 10 for manufacturing a component, such as the component described above. This manufacturing system 10 includes a fixture 12, a cooling system 14 and a machining system 16.

The fixture 12 is configured to support the body 18 during at least a portion of the manufacturing process. The fixture 12 of FIG. 1 is configured to rotate the body 18 about a rotational axis 20. This fixture 12 is also configured to translate the body 18 axially along the axis 20. However, in other embodiments, the fixture 12 may be configured to hold the body 18 substantially static where, for example, one or more components of the systems 14, 16 move relative to the body 18 and the fixture 12. Of course, in still other embodiments, the fixture 12 as well as component(s) of one or more of the other systems 14, 16 may be configured to move.

The cooling system 14 is configured to cool at least a region 22 of the body 18 supported by the fixture 12. The cooling system 14 includes a cooling fluid source 24 and at least one nozzle 26, which is fluidly coupled with and is adapted to receive cooling fluid from the cooling fluid source 24. The nozzle 26 is configured to direct the cooling fluid onto the body 18 to cool at least the region 22 of the body 18 to be machined. The nozzle 26 of FIG. 1, for example, is configured to direct a stream 28 of the cooling fluid to a spatial first location 30. This first location 30 is selected to be forward of a spatial second location 32 where a tool 34 of the machining system 16 engages the body 18. The term "forward" is used herein to describe movement of the body 18 relative to the nozzle 26 and the tool 34. For example, the body 18 may rotate and move axially relative to the nozzle 26 and the tool 34 such that at least the region 22 of the body 18 is cooled by the cooling fluid stream 28 before that now cooled region 22' is engaged by the tool 34.

The machining system 16 includes the tool 34, which physically and directly engages (e.g., contacts) the body 18 of material at the second location 32. The tool 34 may be a cutting tool, a bit, a blade, a media-disk, a media bit, or any other type of tool capable of removing material (e.g., chips, fragments, strips, particulates, etc.) from the body 18. The machining system 16 may be configured to perform a turning operation as illustrated in FIG. 1. The machining system 16 may also or alternatively be configured to perform a milling operation, a drilling operation, a grinding operation and/or a cutting operation. The present disclosure, however, is not limited to the foregoing exemplary machining operations.

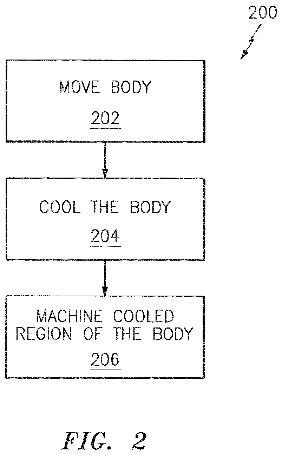

FIG. 2 is a flow diagram of a method 200 for manufacturing a component such as the component described above. This method 200 may be performed using a manufacturing system such as the system 10 of FIG. 1. Of course, the method 200 is not limited to the exemplary component and/or system types or configurations described above.

In step 202, the body 18 is moved relative to the nozzle 26 and the tool 34. The fixture 12, for example, may rotate the body 18 about the rotational axis 20. The fixture 12 may also translate the body 18 axially along the rotational axis 20. This rotational and axial movement may be coordinated such that the body 18 rotates about the rotational axis 20 in a helical manner.

In step 204, the body 18 is cooled. The cooling system 14, for example, directs the cooling fluid out of the nozzle 26 and towards the first location 30. In this manner, the cooling system 14 cools at least the region 22 of the body 18 forward (e.g., upstream process-wise) of the tool 34. This cooling step 204 may be a cryogenic cooling step, where the cooling fluid is a cryogenic fluid. Examples of a suitable cryogenic fluid include, but are not limited to, liquid nitrogen (N₂) and liquid carbon-dioxide (CO₂). By cooling the body 18 in this manner, the region 22 of the body 18 is subject to a temperature drop of, for example, at least negative three hundred degrees Fahrenheit (-300°F) (-184°C); e.g., -321°F (-196°C). Of course, the method 200 is not limited to such an exemplary temperature drop. For example, the temperature drop may alternatively be less than negative three hundred degrees Fahrenheit depending upon the body material and cutting dynamics.

In step 206, the body 18 is machined. More particularly, the tool 34 engages the now cooled region 22' of the body 18 to remove material from the body 18 within that cooled region 22' .

By cooling the region 22 of the body 18 before the machining step 206, certain machining parameters may be adjusted to reducing machining time. For example, a depth-of-cut for the tool 34 may be increased and/or the speed the body 18 moves relative to the tool 34 may be increased. This, in turn, may increase material removal rate during the machining step 206. In addition, the cooling step 204 may enable provision of an improved surface finish and/or an improved metallurgy following the machining step 206. In contrast, machining warmer (uncooled) material may result in a rougher surface finish. Heat generated at a point of engagement between the tool 34 and the material may also cause the metallurgy of the material to change. Cooling the body 18 may also enable easier machining of the body material and thereby reduce wear of the tool 34.

In some embodiments, one or more additional regions of the body 18 may be cooled by the cooling system 14. These additional regions may be forward (e.g., upstream process-wise) of the tool 34. One or more of the regions may also or alternatively be behind (e.g., downstream process-wise of) the tool 34, to provide further material processing / conditioning. In still other embodiments, substantially the entire body 18 may be cooled by the cooling system 14.

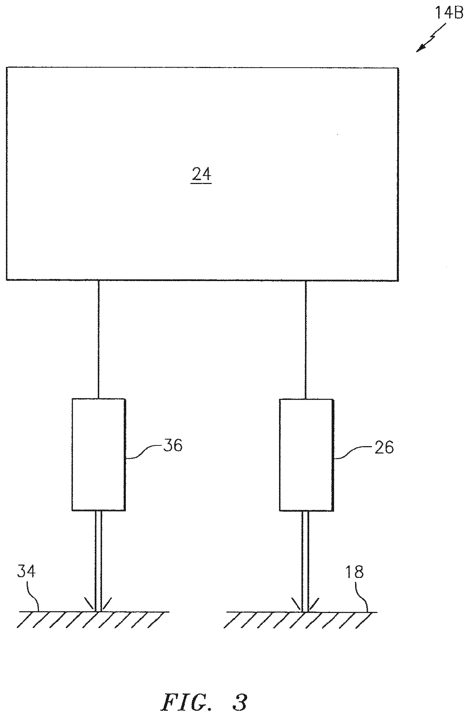

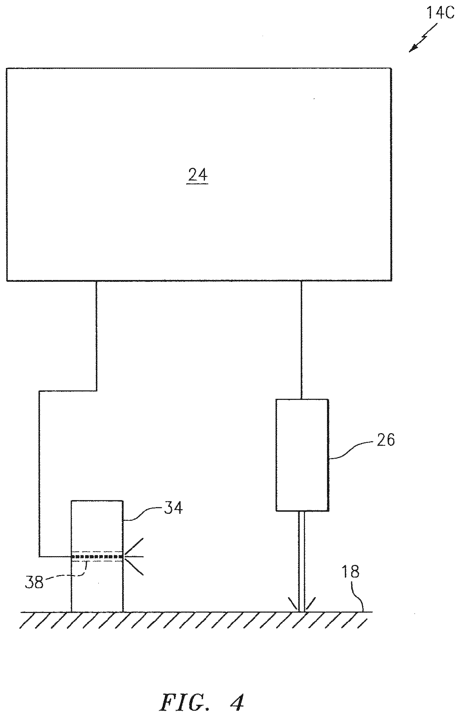

FIGS. 3 and 4 are schematic illustrations of alternatively cooling systems 14B and 14C for the manufacturing system 10 of FIG. 1. These cooling systems 14B and 14C are similar to the cooling system 14 described above. However, the cooling systems 14B and 14C are further configured to cool the tool 34 (and/or one or more other components of the machining system 16) during the machining step 206. The cooling system 14B of FIG. 3, for example, includes at least one additional nozzle 36 that directs the cooling fluid onto the tool 34. In another example, the cooling system 14C of FIG. 4 is configured to flow the cooling fluid through at least one passage 38 within the tool 34. By cooling the tool 34 in addition to the body 18 during the method 200, the material removal rate may be further increased. Cooling the tool 34 may also strengthen the tool 34, which may reduce tool 34 wear.

While various embodiments of the present invention have been disclosed, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. A method for manufacturing a component using a body (18) comprising metal, the method comprising:
cooling the body (18) to provide at least a cooled region (22) of the body (18); and
machining the cooled region (22) using a tool (34) that contacts the cooled region (22).

2. The method of claim 1, wherein the cooling of the body (18) comprises cooling a select region of the body (18).

3. The method of claim 1, wherein the cooling of the body (18) comprises cooling substantially an entirety of the body (18).

4. The method of claim 1, 2 or 3, wherein the body (18) is cooled using cryogenic fluid.

5. The method of claim 4, wherein the cryogenic fluid comprises liquid nitrogen.

6. The method of claim 4, wherein the cryogenic fluid comprises liquid carbon-dioxide.

7. The method of claim 4, 5 or 6, wherein the cryogenic fluid is directed to a first location (30) during the cooling of the body (18), and the tool (34) is at a second location (32) behind the first location (30).

8. The method of any preceding claim, further comprising cooling the tool (34) during the machining.

9. The method of claim 8, wherein the tool (34) is cooled using cryogenic fluid.

10. The method of any preceding claim, wherein the machining of the cooled region (22) comprises milling and/or turning and/or drilling and/or grinding and/or cutting the cooled region (22).

11. A method for manufacturing a component, comprising:
cooling a body (18) and a tool (34) using cryogenic fluid; and
machining a cooled region (22) of the body (18) using a cooled region of the tool (34), wherein the tool (34) engages the body (18) during the machining, wherein, optionally, the cryogenic fluid is directed to a first location (30) during the cooling of the body (18), and the tool (34) is at a second location (32) behind the first location (30).

12. A system (10) for manufacturing a component using a body (18) comprising metal, the system comprising:
a fixture (12) configured to support the body (18);
a cooling system (14; 14B; 14C) configured to cool the body (18) being supported by the fixture (12) to provide at least a cooled region (22) of the body (18); and
a machining system (16) comprising a tool (34) configured to engage and perform a machining operation on the cooled region (22) of the body (18) being supported by the fixture (12).

13. The system (10) of claim 12, wherein the cooling system (14; 14B; 14C) comprises cryogenic fluid.

14. The system (10) of claim 13, wherein the cooling system (14; 14B; 14C) comprises a nozzle (26) configured to direct the cryogenic fluid to a first location (30), and the tool (34) is at a second location (32) behind the first location (30).

15. The system (10) of claim 12, 13 or 14, wherein the machining operation comprises a milling operation, a turning operation, a drilling operation, a grinding operation and/or a cutting operation.
